# FASCICULE DE BREVET EUROPEEN

(11) **EP 0 439 971 B1**
(45) Date de publication et mention de la délivrance du brevet: **21.09.1994**
(21) Numéro de dépôt: 90403315.6
(22) Date de dépôt: 23.11.1990
(51) Int. Cl.: F16C 43/06

(54) **Palier ou roulement notamment à corps roulants jointifs**
Lager oder Wälzlager insbesondere mit aneinanderstossenden Rollkörpern
Bearing or rolling bearing in particular with abutting rolling elements

(30) Priorité: 30.01.1990 FR 9001056
(43) Date de publication de la demande: 07.08.1991
(73) Titulaire: S.N.R. ROULEMENTS, 74010 Annecy Cédex (FR)
(72) Inventeur: Feppon, Philippe, F-74000 Annecy (FR)
(74) Mandataire: Ernst-Schonberg, Michel

(56) Documents cités:
- EP-A- 0 157 935
- FR-A- 2 023 251
- FR-A- 2 142 793
- FR-A- 2 279 971
- US-A- 2 530 660

## Description

L'invention concerne un palier ou roulement notamment à corps roulants jointifs conforme au préambule de la revendication 1.

La publication FR-A-2279971 décrit un tel palier dans lequel un dispositif obturateur au contact des corps roulants possède une face inférieure au contact de l'encoche d'introduction des corps roulants et une face supérieure à flexibilité radiale.

La publication FR-A-2339773 décrit un procédé d'assemblage d'un roulement à billes jointives entre une bague indéformable et une bague en matériau plastique déformable.

Les procédés de montage des corps roulants et les roulements ainsi obtenus nécessitent des matières sélectionnées dont la déformation conditionne la fabrication correcte du roulement.

La publication FR-A-346386 décrit un roulement dans lequel l'une des bagues possède une encoche de montage des corps roulants tandis que l'autre bague possède un orifice radial obturable qui augmente l'ouverture d'introduction. De tels moyens de montage sont inaplicables aux roulements minces ou aux roulements dont un chemin de roulement est porté par un disque plein.

L'invention a pour objet de remédier aux inconvénients des roulements et procédés de montage connus et concerne plus particulièrement un palier ou roulement à corps roulants jointifs soumis à une charge radiale de direction sensiblement constante par rapport à la bague tournante.

La caractéristique de la revendication 1 remédie aux inconvénients précités. Dans le roulement ainsi réalisé, il est possible de monter un plus grand nombre de corps roulants sans nécessiter une quelconque déformation des bagues.

D'autres caractéristiques et avantages du roulement apparaitront à la lecture de la description de deux exemples de réalisation de celui-ci, faite en référence au dessin annexé dans lequel
la figure 1 est une vue de face d'un roulement selon une première variante de réalisation de l'encoche de montage,
la figure 2 est une vue en perspective du dispositif obturateur de l'encoche de montage du roulement représenté à la figure 1,
la figure 3 est une vue en coupe d'une variante de réalisation du dispositif obturateur à partir de deux éléments flexibles munis de moyens d'accrochage mutuel,
la figure 4 est une vue de face du roulement selon une deuxième variante de réalisation de l'encoche,
la figure 5 est une vue en coupe radiale du roulement représenté à la figure 4 suivant la ligne V-V,
la figure 6 est une vue en perspestive de l'obturateur flexible de l'encoche du roulement représenté à la figure 4.

Dans un souci de simplification et de clarté on désignera dans ce qui suit les pièces homologues des roulements et dispositifs représentés sur les différentes figures par les mêmes références.

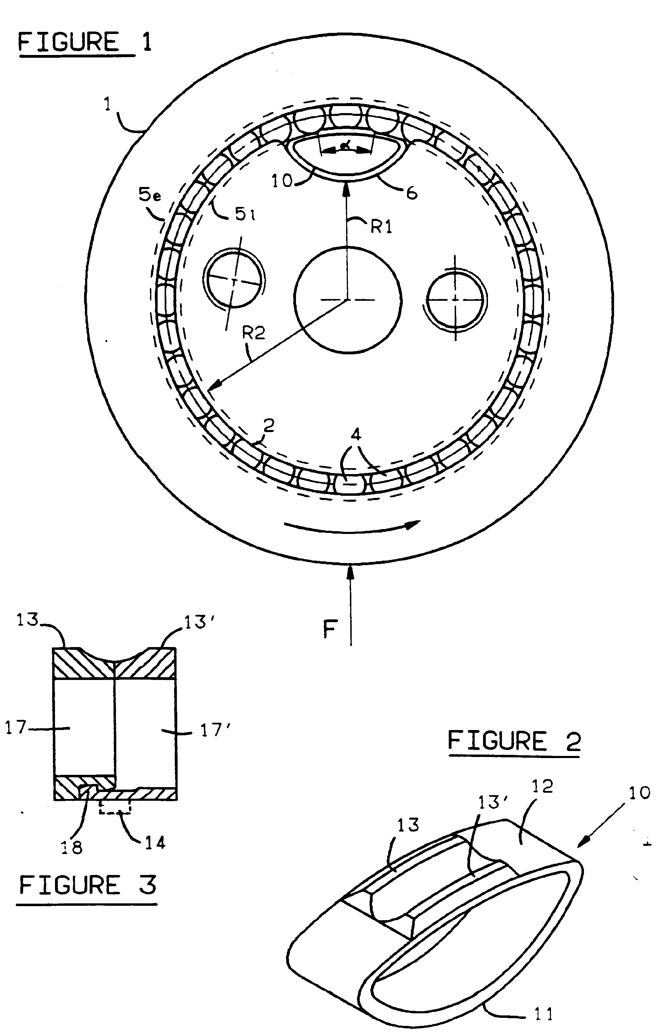

Selon le mode de réalisation du roulement représenté à la figure 1, celui-ci est constitué par une bague extérieure 1 et par une bague intérieure 2, disposées concentriquement qui définissent un espace annulaire recevant des corps roulants 4 au contact de chemins de roulement 5e, 5i portés par les bagues 1 et 2.

La bague intérieure 2 est réalisée sous la forme d'un disque recevant les organes de fixation conventionnels.

La bague extérieure 1 est montée tournante et est soumise à une charge F dirigée radialement vers son axe de rotation.

Une encoche 6 axiale pratiquée a la périphérie de la bague 2 permet l'introduction des corps roulants 4 entre les dites bagues 1,2.

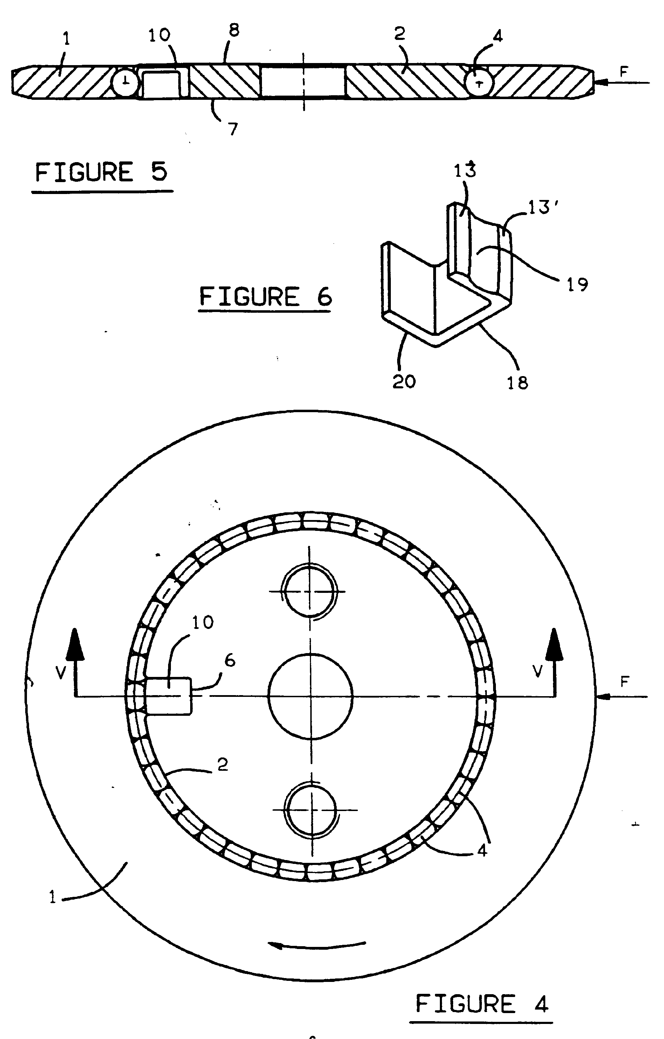

Le fond de l'encoche 6 est cylindrique comme représenté à la figure 1 ou plan selon variante du roulement représentée à la figure 4.

Selon l'invention l'encoche 6 débouche au contact des faces opposées 7, 8 de la bague 2 et son dimensionnement est tel que la distance R1 du fond de l'encoche 6 a l'axe de rotation de la bague 1 est inférieure à la distance correspondante R2 du chemin de roulement 5i porté par la bague 2. .

Selon une autre caractéristique de l'invention l'encoche 6 reçoit un dispositif obturateur 10.

Selon les deux modes de réalisation du dispositif obturateur 10 représentés aux figures 2, 3, l'obturateur possède une face inférieure 11 en contact avec l'encoche 6 et une face supérieure 12 flexible. La flexibilité de la face 12 permet la déformation radiale du dispositif au contact des corps roulants 4 au cours du processus d'obturation de l'encoche.

La face supérieure 12 porte par ailleurs deux nervures 13, 13′ de rétention axiale de l'obturateur qui prennent appui latéralement sur les corps roulants, le long desquelles est formé un secteur angulaire alpha de chemin de roulement 5i.

Ainsi que cela est montré à la figure 3, la face inférieure de l'obturateur 10 possède une nervure 14 engagée dans une rainure de l'encoche 6 dans le but de réaliser un moyen additionnel de retenue axiale de l'obturateur.

Selon une autre variante de réalisation de l'obturateur, ce dernier est constitué par deux éléments flexibles 17, 17′ munis de moyens d'accrochage mutuel 18 représentés schématiquement à la figure 3. Cette variante de réalisation permet le montage axial des éléments 17,17′ au contact des 2 faces de la bague sans déformation radiale notable de l'un ou l'autre élément lorsque ceux-ci comportent des nervures telles que 13, 13′.

Selon le mode réalisation de l'obturateur représenté à la figure 6 celui-ci possède une configuration en C.

La face verticale 18 de l'obturateur est située dans le plan de la bague 2. L'obturateur possède deux ailes axiales 19, 20 parmi lesquelles l'aile 19 définit la face supérieure flexible et porte les nervures 13, 13′ entre lesquelles se situe la portion du chemin de roulement 5i, tandis que l'aile 20 est en appui sur le fond de l'encoche 6.

Sans sortir du cadre de l'invention, le roulement pourra recevoir une cage à parois minces dans laquelle les corps roulants sont très rapprochés.

## Revendications

1. Palier ou roulement notamment à corps roulants jointifs du type comportant une bague extérieure (1) et une bague intérieure (2) concentriques, munies respectivement de chemins de roulement (5i, 5e), une pluralité de corps roulants (4) déposés au contact desdits chemins ; dans lequel une encoche (6) axiale pratiquée dans l'une des bagues forme un chemin d'introduction des corps roulants (4) et débouche sur au moins une face axiale de la bague pour recevoir un dispositif obturateur (10) au contact des corps roulants (4) portant des moyens de rétention axiale (13, 13′) et dans lequel l'obturateur possède une face inférieure (11) au contact de l'encoche (6), caractérisé par le fait, que l'obturateur possède une face supérieure (12) à flexibilité radiale formant un secteur angulaire du chemin de roulement et que ladite face supérieure porte lesdits moyens (13, 13′) de rétention axiale de l'obturateur (10).

2. Palier ou roulement selon la revendication 1, caractérisé par le fait que les moyens de rétention axiale de l'obturateur (10) sont constitués par deux nervures (13, 13′) en appui latéral sur les corps roulants (4), entre lesquelles est formé le secteur angulaire du chemin de roulement.

3. Palier ou roulement selon l'une quelconque des revendications 1, 2, caractérisé par le fait que la face inférieure de l'obturateur (10) possède une nervure de retenue axiale (14) coopérant avec une rainure de l'encoche (6).

4. Palier ou roulement selon l'une quelconque des revendications 1 à 3, caractérisé par le fait que l'obturateur (10) est constitué par deux éléments flexibles (17, 17′) à moyens d'accrochage mutuel.

5. Palier ou roulement selon l'une quelconque des revendications 1 à 3 , caractérisé par le fait que l'obturateur (10) à une configuration en C dont une face verticale située dans le plan de la bague (2) possède deux ailes axiales (19, 20) dont l'une (19) peut être fléchie.

6. Palier ou roulement selon la revendication 5, caractérisé par le fait que l'aile axiale flexible (19) de l'obturateur porte des nervures (13, 13′) latérales délimitant un secteur du chemin du roulement.

## Patentansprüche

1. Lager oder Wälzlager mit aneinanderstoßenden Rollkörpern, das einen äußeren Ring (1) und einen inneren konzentrischen Ring (2) aufweist, die mit Rollbahnen (5i, 5e) versehen sind, wobei eine Vielzahl von Rollkörpern (4) derart angeordnet ist, daß sie die Bahnen berühren und wobei eine axiale Aussparung (6), die in einen der Ringe eingearbeitet ist, einen Einführweg für die Rollkörper (4) bildet und in wenigstens einer Axialfläche des Ringes mündet zur Aufnahme einer Verschlußanordnung (10), die mit den Rollkörpern (4) in Verbindung steht und die eine axiale Rückhalteanordnung (13, 13′) trägt, innerhalb derer der Verschluß eine die Aussparung (6) berührende untere Fläche (11) aufweist, dadurch gekennzeichnet, daß der Verschluß eine obere in radialer Richtung flexible Fläche (12) aufweist, die einen Winkelabschnitt der Rollbahn bildet und daß die obere Fläche die axiale Rückhaltanordnung (13, 13′) des Verschlusses (10) trägt.

2. Lager oder Wälzlager nach Anspruch 1, dadurch gekennzeichnet, daß die axiale Rückhalteanordnung des Verschlusses (10) aus zwei Rippen (13, 13′) besteht, die sich seitlich auf den Rollkörpern (4) abstützen und zwischen denen der Winkelabschnitt der Rollbahn ausgebildet ist.

3. Lager oder Wälzlager nach einem der Ansprüdche 1, 2, dadurch gekennzeichnet, daß die untere Fläche des Verschlusses (10) eine axiale Rückhalterippe (14) besitzt, welche mit einer Nut in der Aussparung (6) zusammenwirkt.

4. Lager oder Wälzlager nach einem der Ansprüche 1 bis 3, dadurch gekennzeichnet, daß der Verschluß (C) aus zwei flexiblen Teilen (17, 17′) mit einer gegenseitigen Verankerungsanordnung besteht.

5. Lager oder Wälzlager nach einem der Asnprüche 1 bis 3, dadurch gekennzeichnet, daß der Verschluß (10) eine C-förmige Gestalt aufweist, deren eine senkrecht Fläche in der Ebene des Ringes (2) zwei axiale Flügel (19, 20) aufweist, von denen einer (19) gebogen sein kann.

6. Lager oder Wälzlager nach Anspruch 5, dadurch gekennzeichnet, daß der flexible axiale Flügel (19) des Verschlusses seitliche Rippen (13, 13′) trägt, welche einen Abschnitt der Rollbahn begrenzen.

## Claims

1. A bearing or rolling bearing in particular having contiguous rolling bodies of the type comprising an outer race (1) and an inner race (2) which are concentric and respectively provided with rolling tracks (5i, 5e), a plurality of rolling bodies (4) disposed in contact with said tracks; wherein an axial notch (6) provided in one of the races forms a path for introduction of the rolling bodies (4) and opens at at least one axial face of the race to receive a closure device (10) in contact with the rolling bodies (4) bearing axial retention means (13, 13′) and wherein the closure member has a lower face (11) in contact with the notch (6), characterised in that the closure member has an upper face (12) with radial flexibility forming an angular sector of the rolling track and that said upper face carries said means (13, 13′) for axial retention of the closure member (10).

2. A bearing or rolling bearing according to claim 1 characterised in that the means for axial retention of the closure member (10) are formed by two ribs (13, 13′) bearing laterally against the rolling bodies (4), between which ribs the angular sector of the rolling track is formed.

3. A bearing or rolling bearing according to either one of claims 1 and 2 characterised in that the lower face of the closure member (10) has an axial-retention rib (14) co-operating with a groove in the notch (6).

4. A bearing or rolling bearing according to any one of claims 1 to 3 characterised in that the closure member (10) is formed by two flexible elements (17, 17′) having mutual latching means.

5. A bearing or rolling bearing according to any one of claims 1 to 3 characterised in that the closure member (10) is of a C-shaped configuration of which a vertical face which is disposed in the plane of the race (2) has two axial limbs (19, 20) of which the one (19) can be bent.

6. A bearing or rolling bearing according to claim 5 characterised in that the flexible axial limb (19) of the closure member carries lateral ribs (13, 13′) delimiting a sector of the rolling bearing track.
